# EUROPEAN PATENT APPLICATION

(11) **EP 4 607 668 A1**
(43) Date of publication of application: **27.08.2025**
(21) Application number: 24208361.6
(22) Date of filing: 23.10.2024
(51) Int. Cl.: H01M 50/209, H01M 50/367, H01M 50/30

(54) **BATTERY CELLS AND BATTERY MODULES**

(30) Priority: 20.02.2024 KR 20240024015
(71) Applicant: SAMSUNG SDI CO., LTD., Yongin-si, Gyeonggi-do 17084 (KR)
(72) Inventor: WOO, Beom Jun, 17084 Yongin-si (KR); JEON, Jee Hoon, 17084 Yongin-si (KR); YOON, Gwang Taek, 17084 Yongin-si (KR); JUNG, Jung Kyun, 17084 Yongin-si (KR)
(74) Representative: Marks & Clerk LLP

(57) **Abstract**

Disclosed are battery cells and battery modules including a battery cell. The battery cells and battery modules are capable of releasing a high-temperature/high-pressure gas if thermal runaway occurs in a battery cell so as to protect other battery cells. The battery module includes a battery cell including a safety vent on a top surface thereof, a case configured to accommodate the battery cell, and an insulating cover disposed on a top surface of the battery cell and including a section disposed on the safety vent, wherein the section includes a notch.

## Description

### BACKGROUND

### 1. Field

Embodiments relate to battery cells and battery modules.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

In some embodiments of the present disclosure a battery module is capable of effectively releasing a high-temperature/high-pressure gas if thermal runaway occurs in a battery cell to protect other battery cells.

These and other aspects and features of the present disclosure will be described in or will be apparent from the following description of embodiments of the present disclosure.

According to some embodiments, a battery module includes: a battery cell including a safety vent on a top surface of the battery cell; a case configured to accommodate the battery cell; and an insulating cover disposed on the top surface of the battery cell, the insulating cover including a section disposed on the safety vent, wherein the section includes a notch.

The section may be a first section, and the insulating cover may include a second section attached to the top surface of the battery cell.

The notch may be disposed adjacent to a boundary between the first section and the second section.

The battery cell may include a terminal on the top surface of the battery cell, and the second section may include an opening through which the terminal passes to be exposed.

The battery cell may include a first terminal and a second terminal on the top surface of the battery cell, the safety vent may be disposed between the first terminal and the second terminal, and the section may be a first section, and the insulating cover may include a second section attached to the top surface of the battery cell at a side of the first terminal and a third section attached to the top surface of the battery cell at a side of the second terminal.

The first section and the second section may be integrated with each other.

The notch may be disposed adjacent to at least one of a boundary between the first section and the second section or a boundary between the first section and the third section.

The first section may include an additional notch provided across the safety vent.

The second section may include an opening through which the first terminal passes to be exposed, and the third section may include an opening through which the second terminal passes to be exposed.

The battery cell may be provided in plurality, and the insulating cover may be applied to each of the plurality of battery cells.

The battery cell may include an insulating sheet disposed between two adjacent battery cells.

The insulating sheet may protrude higher than the insulating cover.

The battery cell may include a first terminal and a second terminal on the top surface thereof, the safety vent may be disposed between the first terminal and the second terminal, the battery cell may be provided in plurality including a first battery cell and a second battery cell, and the insulating cover may include a first part and a second part, wherein the first part may include a section corresponding to the first section with respect to the first battery cell and disposed on the safety vent of the first battery cell, a section attached to a top surface of the first battery cell at a side of the first terminal of the first battery cell, and a section attached to a top surface of the second battery cell at a side of the first terminal of the second battery cell, and the second part may include a section attached to a top surface of the first battery cell at a side of the second terminal of the first battery cell, a section corresponding to the first section with respect to the second battery cell and disposed on the safety vent of the second battery cell, and a section attached to a top surface of the second battery cell at a side of the second terminal of the second battery cell.

The first part may be formed in one piece, the second part may be formed in one piece, and the first part and the second part may be separated from each other.

Each notch may be disposed adjacent to each of a boundary between the section disposed on the safety vent of the first battery cell and the section attached to the top surface of the first battery cell at the side of the first terminal of the first battery cell in the first part and a boundary between the section disposed on the safety vent of the second battery cell and the section attached to the top surface of the second battery cell at the side of the second terminal of the second battery cell in the second part.

The battery cell may be provided in plurality, the insulating cover may be provided in number corresponding to the number of battery cells, and the battery module may further include a connection part configured to connect two adjacent insulating covers to each other.

The connection part may be disposed at a lateral side of the insulating cover.

The insulating cover and the connection part may be integrated with each other.

According to some embodiments, a battery pack includes: the above-described battery module; and a housing configured to accommodate the battery module.

According to some embodiments, a vehicle includes the above-described battery pack.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view of a battery module according to embodiments;
FIG. 2 illustrates an exploded view of the battery module according to embodiments;
FIG. 3 illustrates a plan view of an insulating cover of the battery module according to embodiments;
FIG. 4 illustrates a view of a configuration if the battery cells are viewed form the side in the battery module according to embodiments;
FIG. 5 illustrates a plan view of an insulating cover of a battery module according to other embodiments;
FIG. 6 illustrates a plan view of an insulating cover of a battery module according to other embodiments;
FIG. 7 illustrates a plan view of an insulating cover of a battery module according to other embodiments;
FIGS. 8 and 9 illustrate a view of a battery pack including a battery module according to any one of embodiments; and
FIGS. 10 and 11 illustrate a view of a vehicle body and components of the vehicle body, which includes the battery pack including the battery module according to any one of embodiments.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, over-charge, over-current protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

Hereinafter, a battery module according to each embodiment of the present disclosure will be described in detail with reference to the drawings.

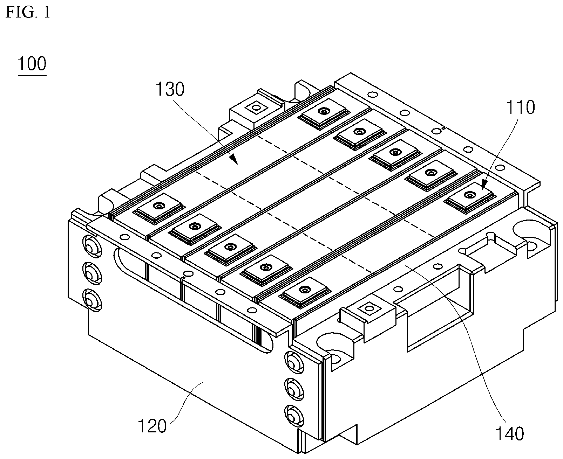

FIG. 1 illustrates a perspective view of a battery module 100 according to embodiments.

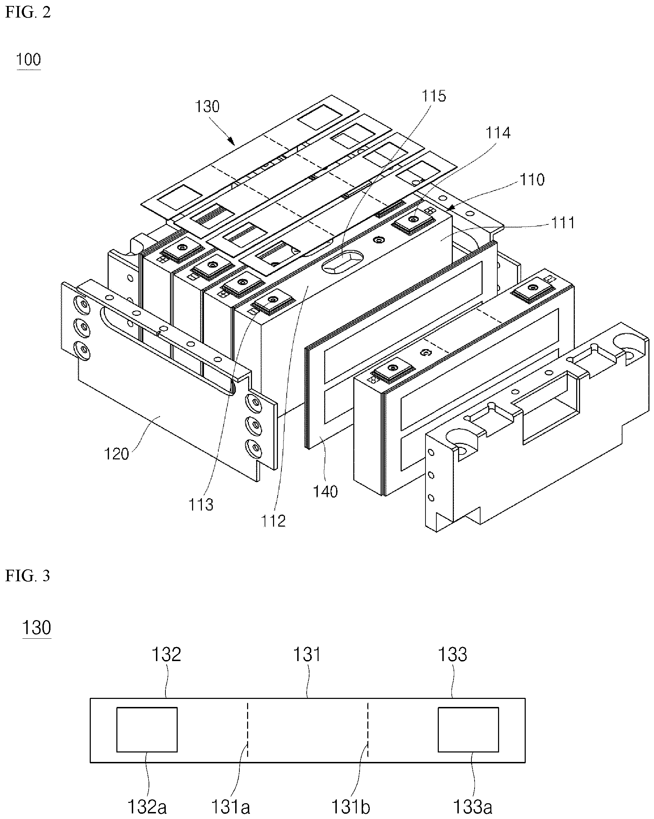

FIG. 2 illustrates an exploded view of the battery module 100 according to embodiments.
FIG. 3 illustrates a plan view of an insulating cover 130 of the battery module 100 according to embodiments.

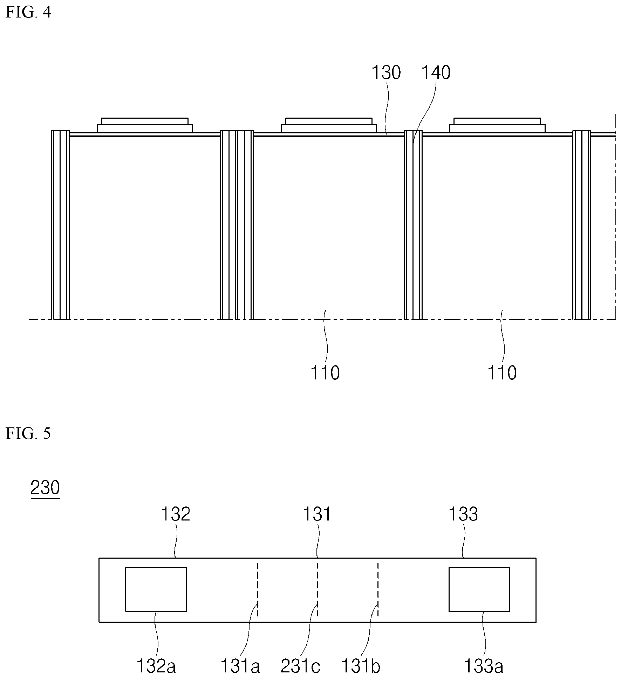

FIG. 4 illustrates a view of a configuration if the battery cells 110 are viewed form the side in the battery module 100 according to embodiments.

Referring to FIGS. 1 and 2, the battery module 100 according to embodiments may include battery cells 110, a casing 120, an insulating cover 130, and an insulating sheet 140.

The battery cell 110 may include at least one electrode assembly (not shown) wound with a separator that is an insulator between a positive electrode and a negative electrode, a case 111 in which the electrode assembly is embedded, and a cap plate 112 coupled to an opening of the case 111.

The battery cell 110 may have a prismatic type cell that is a lithium ion secondary battery, but the present disclosure is not limited thereto. For example, the present disclosure may be applied to various types of batteries such as lithium polymer batteries or cylindrical batteries. However, hereinafter, for convenience the battery cell 110 is described as the prismatic type battery cell.

Each of the positive electrode and the negative electrode may include a coating portion (i.e., an area on which an active material is applied to a current collector, the current collector being a thin metal foil), and a non-coating portion (i.e., an area on which the active material is not applied).

The positive electrode and the negative electrode may be wound with a separator, which is an electrical insulator, therebetween. However, the present disclosure is not limited thereto, and the above-described electrode assembly may have a structure in which the positive electrode and the negative electrode are provided as a plurality of sheets that are alternately stacked with the separator therebetween.

The case 111 may define an overall outer appearance of the battery cell 110 and may be made of a conductive metal such as aluminum, an aluminum alloy, or nickel-plated steel. In some embodiments, the case 111 may provide a space in which the electrode assembly is accommodated.

The cap plate 112 may cover an opening of the case 111, and the case 111 and the cap plate 112 may be made of a conductive material. In some embodiments, the positive and negative electrode terminals 113 and 114 electrically connected to the positive and negative electrodes may be installed to protrude outward through the cap plate 112. Hereinafter, if the battery cells 110 are arranged in a row, the terminals 113 aligned at one side (e.g., a left side in the drawing) may be referred to as first terminals 113 and the terminals 114 aligned at an opposite side (e.g., a right side in the drawing) may be referred to second terminals 114. In some embodiments, the first terminal 113 and the second terminal 114 may be distinguished from each other not based on their positions, but rather based on their polarities. In some embodiments, if the first terminal 113 of one battery cell 110 is the positive terminal, the battery cell adjacent to the first terminal 113 may be the negative electrode terminal or the positive electrode terminal according to whether the battery cells 110 are arranged in series or parallel.

In some embodiments, an outer circumferential surface of an upper pillar of each of the positive and negative electrode terminals 113 and 114 protruding to outside of the cap plate 112 may be threaded and fixed to the cap plate through a nut. However, the present disclosure is not limited thereto, and the positive and negative electrode terminals 113 and 114 may be rivet-coupled in a rivet structure or may be welded to the cap plate 112.

In some embodiments, the cap plate 112 may be provided as a thin plate and may be coupled to an opening of the case 111, and an electrolyte injection port on which a sealing stopper is installed may be provided in the cap plate 112. Also, a safety vent 115 having a notch may be installed on the cap plate 112.

The casing 120 may define an accommodation space in which the battery cell 110 is accommodated.

The battery cell 110 may generate a large amount of heat during charging/discharging. The generated heat may be accumulated in the battery cell 110 and may accelerate deterioration of the battery cell 110. In some embodiments, the casing 120 may include a cooling member that suppresses the deterioration of the battery cell 110. The cooling member may be provided at a lower portion of the accommodation space in which the battery cell 110 is provided, but is not limited thereto and may be provided at an upper portion or on a side surface depending on the casing 120.

Referring to FIG. 3 together with FIGS. 1 and 2, the insulating cover 130 may be disposed on the top surface of the battery cell 110, e.g., the cap plate 112, to reduce or prevent heat from being transferred through the upper portion of the battery cell 110 if the thermal runaway occurs in the battery cell 110. For this, the insulating cover 130 may be made of a heat-resistant, non-flammable and/or flame-retardant material.

The insulating cover 130 may be provided in a shape corresponding to the cap plate 112 to entirely cover the cap plate 112, thereby effectively reducing or preventing the heat transfer through the upper portion of the battery cell 110.

In some embodiments, the insulating cover 130 may include a first section 131 disposed on the safety vent 115, a second section 132 attached to the cap plate 112 at a side of the first terminal 113, and a third section 133 attached to the cap plate 112 at a side of the second terminal 114. The sections 131, 132, and 133 may be integrated with each other.

The first section 131 may be a section disposed on the safety vent 115. The first section 131 itself may not be directly attached to the cap plate 112 or the safety vent 115, and the second section 132 and the third section 133, which extend from the first section 131, may be attached to the cap plate 112 so that the first section 131 is fixed with respect to the cap plate 112.

In some embodiments, the first section 131 may include notches 131a and 131b. The notches 131a and 131b may be disposed adjacent to a boundary between the first section 131 and the second section 132 and a boundary between the first section 131 and the third section 133, respectively. In some embodiments, if a thermal runaway occurs in the battery cell 110 and a gas is released through the safety vent 115, the first section may be broken around the notches 131a and 131b by the pressure and then may be separated from the second section 132 and/or the third section 133 so that the gas is smoothly released.

The second section 132 may be a section to be attached to the cap plate 112 at a side of the first terminal 113 and may have an opening 132a defined in a shape corresponding to the first terminal 113 so that the first terminal 113 passes to be exposed.

The third section 133 may be a section to be attached to the cap plate 112 at a side of the second terminal 114 and may have an opening 133a defined in a shape corresponding to the second terminal 114 so that the second terminal 114 passes to be exposed.

The insulating cover 130 may be applied to an individual battery cell 110. In some embodiments, if five battery cells 110 are provided, then five insulating covers 130 may be provided so that one insulating cover 130 is applied to each battery cell 110. In some embodiments, if a thermal runaway occurs in one battery cell 110, only the first section 131 of the corresponding insulating cover 130 may be separated, and the other insulating covers 130 may not be directly affected by the separation itself to protect the remaining battery cells 110 against a high temperature/high pressure gas event.

The insulating sheet 140 may be disposed between two adjacent battery cells 110 to serve to reduce or prevent heat transfer to the adjacent battery cell 110 if a thermal runaway occurs in one battery cell 110. For this, the insulating sheet 140 may be made of a heat-resistant, non-flammable, and/or flame-retardant material such as mica.

In some embodiments, an upper end of the insulating sheet 140 may protrude above the insulating cover 130 as shown in FIG. 4. In some embodiments, if a thermal runaway occurs in one battery cell 110, heat transfer to the battery cell 110 adjacent thereto at the upper portion may be more effectively prevented by the protruding insulating sheet 140.

FIG. 5 illustrates a plane view of an insulating cover of a battery module according to other embodiments.

A battery module according to other embodiments may include a battery cell, a casing, an insulating cover 230, and an insulating sheet. Because the battery cell, the casing, and the insulating sheet of the battery module of FIG. 5 are the same as the battery cell 110, the casing 120, and the insulating sheet 140 of the battery module 100 described above, their duplicated description will be omitted, and hereinafter, the insulating cover 230 will be mainly described.

Referring to FIG. 5, when compared to the insulating cover 130 previously described with reference to FIG. 3, the insulating cover 230 is different from the above-described insulating cover in that an additional notch 231c may be provided between two notches 131a and 131b. Because other portions are substantially the same as those of the insulating cover 130, their duplicated description will be omitted, and the related reference numerals in FIG. 5 will be identically indicated.

The additional notch 231c may be disposed across the safety vent. In some embodiments, if a gas is released through the safety vent, the first section 131 may be separated more quickly and reliably by breaking a first section 131 around the additional notch 231c directly above the safety vent to which the pressure acts directly.

In FIG. 3, the additional notch 231c is disposed vertically between the two notches 131a and 131b, but in some embodiments, the additional notch 231c may be disposed horizontally.

In some embodiments, in FIG. 3, one additional notch 231c may be provided, but in some embodiments, two or more notches may be provided. In some embodiments, the additional notches may be provided in the same direction as each other or may be provided in different directions. For example, one notch may be provided vertically, and the other notch may be provided horizontally, or the notches may cross each other.

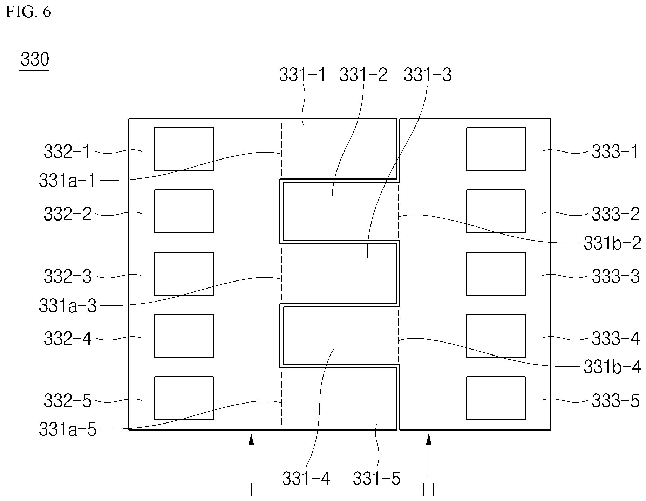

FIG. 6 illustrates a plan view of an insulating cover of a battery module according to other embodiments.

The battery module according to other embodiments may include battery cells, a casing, an insulating cover 330, and an insulating sheet. Because the battery cells and casing of the battery module according to FIG. 6 are the same as the battery cell 110 and the casing 120 of the battery module 100 according to those described previous, their duplicated description will be omitted.

Referring to FIG. 6, the insulating cover 330 may be constituted by two parts, that is, a first part I and a second part II. The first part I may include sections 332-1, 332-2, 332-3, 332-4, and 332-5 that are attached together to a cap plate at a side of a first terminal with respect to a plurality of battery cells, and the second part II may include sections 333-1, 333-2, 333-3, 333-4, and 333-5 that are attached together to the cap plate at a side of a second terminal with respect to the plurality of battery cells. The first part I and the second part II may alternately include sections 331-1, 331-2, 331-3, 331-4, and 331-5 disposed on a safety vent.

In some embodiments, for example, if assuming that five battery cells are provided and are sequentially called a first battery cell, a second battery cell, a third battery cell, a fourth battery cell, and a fifth battery cell, the first part I may include (1) a section 331-1 disposed on the safety vent of the first battery cell, (2) a section 332-1 attached to the cap plate at a side of the first terminal of the first battery cell, (3) a section 332-2 attached to the cap plate at a side of the first terminal of the second battery cell, (4) a section 331-3 disposed on the safety vent of the third battery cell, (5) a section 332-3 attached to the cap plate at a side of the first terminal side of the third battery cell, (6) a section 332-4 attached to the cap plate at a side of the first terminal side of the fourth battery cell, (7) a section 331-5 disposed on the safety vent of the fifth battery cell, and (8) a section 332-5 attached to the cap plate at a side of the first terminal of the fifth battery cell. The sections 331-1, 332-1, 332-2, 331-3, 332-3, 332-4, 331-5, and 332-5 may be integrated with each other.

In some embodiments, the second part II may include (1) a section 333-1 attached to the cap plate at a side of the second terminal of the first battery cell, (2) a section 331-2 disposed on the safety vent of the second battery cell, (3) a section 333-2 attached to the cap plate at a side of the second terminal of the second battery cell, (4) a section 333-3 attached to the cap plate at a side of the second terminal of the third battery cell, (5) a section 331-4 disposed on the safety vent of the fourth battery cell, (6) a section 333-4 attached to the cap plate at a side of the second terminal of the fourth battery cell, and (7) a section 333-5 attached to the cap plate at a side of the second terminal of the fifth battery cell. The sections 333-1, 331-2, 333-2, 333-3, 331-4, 333-4, and 333-5 may be integrated with each other.

In some embodiments, the notch 331a-1 may be adjacent to a boundary between the section 331-1 disposed on the safety vent of the first battery cell and the section 332-1 attached to the cap plate at the side of the first terminal of the first battery cell, the notch 331b-2 may be adjacent to a boundary between the section 331-2 disposed on the safety vent of the second battery cell and the section 333-2 attached to the cap plate at the side of the second terminal of the second battery cell, the notch 331a-3 may be adjacent to a boundary between the section 331-3 disposed on the safety vent of the third battery cell and the section 332-3 attached to the cap plate at the side of the first terminal of the third battery cell, the notch 331b-4 may be adjacent to a boundary between the section 331-4 disposed on the safety vent of the fourth battery cell and the section 333-4 attached to the cap plate at the side of the second terminal of the fourth battery cell, and the notch 331a-5 may be adjacent to a boundary between the section 331-5 disposed on the safety vent of the fifth battery cell and the section 332-5 attached to the cap plate at the side of the first terminal of the fifth battery cell.

The section 331-1 disposed on the safety vent of the first battery cell and the section 333-1 attached to the cap plate at the side of the second terminal of the first battery cell may be separated from each other, the section 331-2 disposed on the safety vent of the second battery cell and the section 332-2 attached to the cap plate at the side of the first terminal of the second battery cell may be separated from each other, the section 331-3 disposed on the safety vent of the third battery cell and the section 333-3 attached to the cap plate at the side of the second terminal of the third battery cell may be separated from each other, the section 331-4 disposed on the safety vent of the fourth battery cell and the section 332-4 attached to the cap plate at the side of the first terminal side of the fourth battery cell may be separated from each other, and the section 331-5 disposed on the safety vent of the fifth battery cell and the section 333-5 attached to the cap plate at the side of the second terminal of the fifth battery cell may be separated from each other.

Therefore, if the thermal runaway occurs in one battery cell, for example, if the thermal runaway occurs in the second battery cell, only the section 331-2 disposed on the safety vent may be separated around the notch 331b-2 or bent upward, and because the other portion is not directly affected by the deformation itself, the remaining battery cells may be protected against a high temperature/high pressure gas event.

Although there is a small gap between the first part I and the second part II to express that the first part I and the second part II are separated from each other in FIG. 6, in some embodiments the first part I and the second part II may actually be in contact with each other without a clear gap therebetween.

The insulating sheet may be disposed between two adjacent battery cells to serve to reduce or prevent heat transfer to the adjacent battery cell if a thermal runaway occurs in one battery cell. For this, the insulating sheet may be made of a heat-resistant, non-flammable and/or flame-retardant material such as mica.

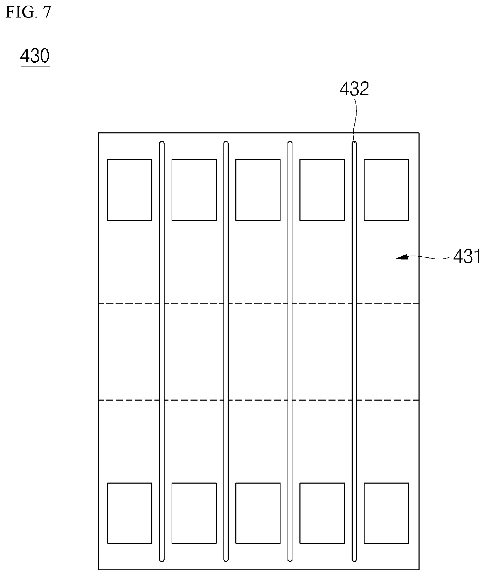

FIG. 7 illustrates a plan view of an insulating cover of a battery module according to other embodiments.

A battery module according to FIG. 7 may include battery cells, a casing, an insulating cover 430, and an insulating sheet. However, because the battery cells, the casing, and the insulating sheet of the battery module according to FIG. 7 are the same as the battery cells 110, the casing 120, and the insulating sheet 140 of the battery module 100 according to embodiments described above, their duplicated description is omitted.

Referring to FIG. 7, the insulating cover 430 may include a plurality of sub-insulating covers 431 and a connection part 432.

Each of the sub-insulating covers 431 may be provided, for example, like the insulating cover 130 illustrated in FIG. 3 or the insulating cover 230 illustrated in FIG. 5. All of the plurality of sub-insulating covers 431 may be provided in the same manner as the insulating cover 130 as illustrated in FIG. 3 or the insulating cover 230 as illustrated in FIG. 5. In some embodiments, some of the plurality of sub-insulating covers 431 may be provided in the same manner as the insulating cover 130 as illustrated in FIG. 3, and others of the plurality of sub-insulating covers 431 may be provided in the same manner as the insulating cover 230 as illustrated in FIG. 5. In FIG. 7, the plurality of sub-insulating covers 431 are illustrated as being provided in the same manner as the insulating cover 130 as illustrated in FIG. 3.

The sub-insulating covers 431 may be provided in a number corresponding to the number of battery cells in the battery module and be disposed on the individual battery cells, respectively. For example, if five battery cells are provided in the battery module and arranged in a row, five sub-insulating covers 431 may also be provided and arranged in a row.

The connection part 432 may serve to connect the sub-insulating covers 431 to each other.

Therefore, because the plurality of sub-insulating covers 431 are modularized/integrated into one component by the connection part 432, the plurality of sub-insulating covers 431 may be easily installed and managed at once.

In FIG. 7, the connection part 432 is illustrated as connecting the sub-insulating cover 431 to each other at both lateral sides of the sub-insulating cover 431. In some embodiments, the connection part 432 may be disposed furthest from the safety vent of the battery cell to minimize an effect on the operation of the safety vent and the resulting breaking in the first section in the middle of the sub-insulating cover 431. This configuration maintains the gas releasing performance.

In some embodiments, because the connection part 432 is provided at each of both lateral sides of the sub-insulating cover 431, structural stability of the insulating cover 430 may be improved compared to if the connection part 432 is provided only at one side of the sub-insulating cover 431.

However, the structure in which the connection part 432 is disposed at a point other than both lateral sides of the sub-insulating cover 431, or the connection part 432 is disposed only at one lateral side of the sub-insulating cover 431, can also be used.

The sub-insulating cover 431 and the connection part 432 may be integrated with each other.

According to the present disclosure, an insulating cover may be disposed on a top surface of a battery cell to reduce or prevent heat from being transferred through the upper portion of the battery cell if a thermal runaway occurs in the battery cell, thereby protecting other battery cells.

In some embodiments, a notch may be provided in the area disposed above the safety vent, and thus, if the gas is released through the safety vent, the area may be broken and separated by the pressure with respect to the notch, thereby smoothly releasing the gas.

However, the aspects and features of the present disclosure are not limited to those described above, and other aspects and features not expressly described herein will be clearly understood by a person skilled in the art from the description of example embodiments of the present disclosure described below.

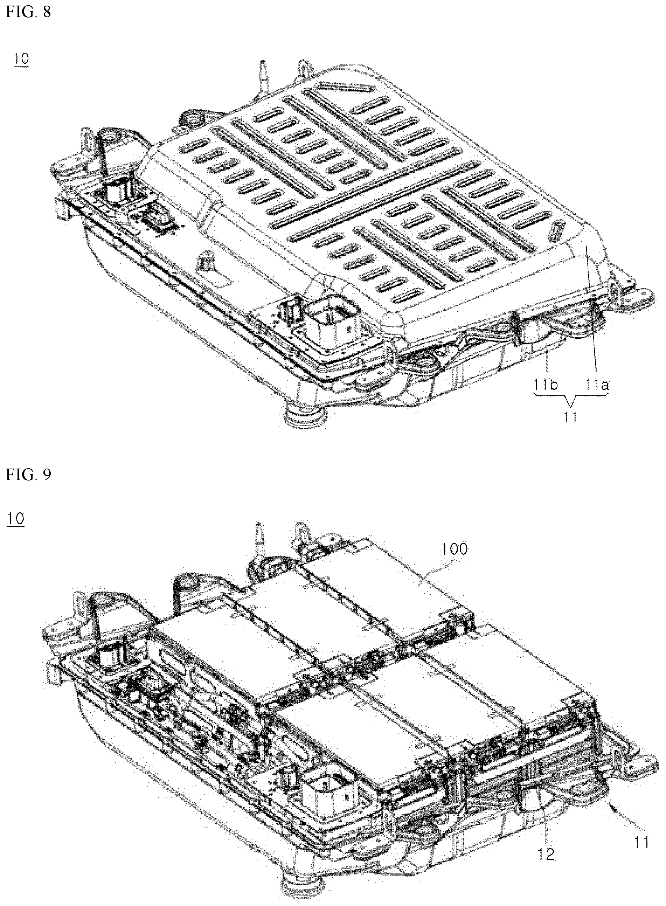

FIGS. 8 and 9 show a battery pack 10 comprising a battery module 100 according to one or more embodiments of the present invention.

The battery pack 10 may include a plurality of battery modules 100 and a housing 11 for accommodating the plurality of battery modules 100. For example, the housing 11 may include first and second housings 11a and 11b coupled in opposite directions through the plurality of battery modules 100. The plurality of battery modules 100 may be electrically connected to each other by using a bus bar 12, and the plurality of battery modules 100 may be electrically connected to each other in a series/parallel or series-parallel mixed method, thereby obtaining desired (e.g., required) electrical output.

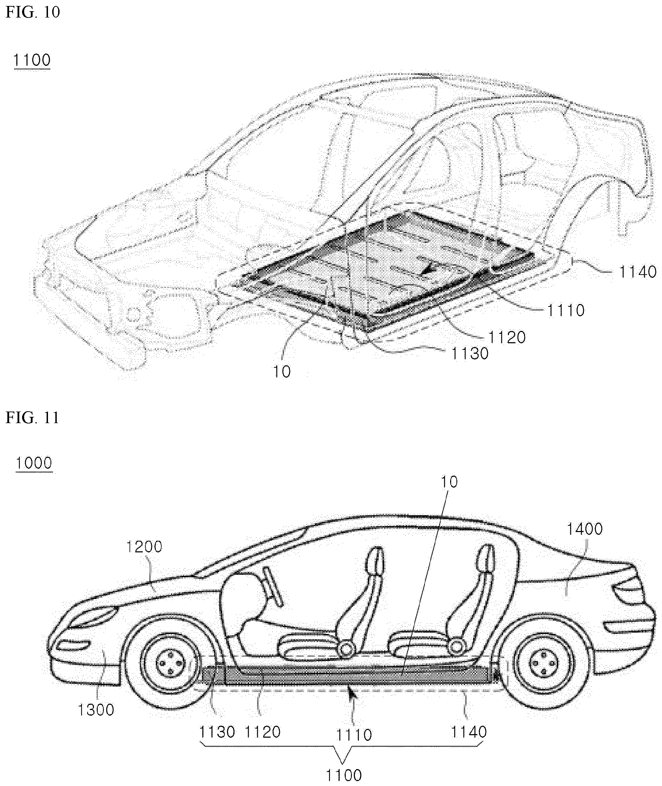

FIGS. 10 and 11 show a vehicle 1000 and vehicle body 1100 having a battery pack 10 comprising a battery module 100 according to one or more embodiments of the present disclosure.

In FIG. 10, a battery pack 10 may include a battery pack cover 1120, which is a part of a vehicle underbody 1110, and a pack frame 1130 disposed under the vehicle underbody 1110. The pack frame 1130 and the battery pack cover 1120 may be integrally formed with a vehicle floor 1140.

The vehicle underbody 1110 separates the inside and outside of a vehicle, and the pack frame 1130 may be disposed outside the vehicle.

In FIG. 11, a vehicle 1000 may be formed by combining additional parts, such as a hood 1200 in front of the vehicle and fenders 1300, 1400 respectively located in the front and rear of the vehicle to a vehicle body 1100.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure and the claims and their equivalents, below.

## Claims

1. A battery module comprising:
a battery cell comprising a safety vent on a top surface of the battery cell;
a case configured to accommodate the battery cell; and
an insulating cover disposed on the top surface of the battery cell, the insulating cover comprising a section disposed on the safety vent, wherein the section comprises a notch.

2. The battery module as recited in claim 1, wherein the section is a first section, and the insulating cover comprises a second section attached to the top surface of the battery cell.

3. The battery module as recited in claim 2, wherein the notch is disposed adjacent to a boundary between the first section and the second section.

4. The battery module as recited in claim 2 or 3, wherein the battery cell comprises a terminal on the top surface of the battery cell, and
the second section comprises an opening through which the terminal passes to be exposed.

5. The battery module as recited in claim 1, wherein the battery cell comprises a first terminal and a second terminal on the top surface of the battery cell,
the safety vent is disposed between the first terminal and the second terminal, and
the section is a first section, and the insulating cover comprises a second section attached to the top surface of the battery cell at a side of the first terminal and a third section attached to the top surface of the battery cell at a side of the second terminal.

6. The battery module as recited in claim 2, 3 or 4, wherein the first section and the second section are integrated with each other.

7. The battery module as recited in claim 5, wherein the notch is disposed adjacent to at least one of a boundary between the first section and the second section or a boundary between the first section and the third section.

8. The battery module as recited in claim 3 or any claim dependent on claim 3, wherein the first section comprises an additional notch provided across the safety vent.

9. The battery module as recited in claim 5 or any claim dependent on claim 5, wherein the second section comprises an opening through which the first terminal passes to be exposed, and
the third section comprises an opening through which the second terminal passes to be exposed.

10. The battery module as recited in any preceding claim, wherein the battery cell is provided in plurality, and
the insulating cover is applied to each of the plurality of battery cells.

11. The battery module as recited in claim 10, further comprising an insulating sheet disposed between two adjacent battery cells, and optionally
wherein the insulating sheet protrudes higher than the insulating cover.

12. The battery module as recited in claim 1, wherein the section is a first section,
the battery cell comprises a first terminal and a second terminal on the top surface thereof,
the safety vent is disposed between the first terminal and the second terminal,
the battery cell is provided in plurality comprising a first battery cell and a second battery cell, and
the insulating cover comprises a first part and a second part,
wherein the first part comprises a section corresponding to the first section with respect to the first battery cell and disposed on the safety vent of the first battery cell, a section attached to a top surface of the first battery cell at a side of the first terminal of the first battery cell, and a section attached to a top surface of the second battery cell at a side of the first terminal of the second battery cell, and
the second part comprises a section attached to a top surface of the first battery cell at a side of the second terminal of the first battery cell, a section corresponding to the first section with respect to the second battery cell and disposed on the safety vent of the second battery cell, and a section attached to a top surface of the second battery cell at a side of the second terminal of the second battery cell, and optionally
wherein the first part is formed in one piece,
the second part is formed in one piece, and
the first part and the second part are separated from each other, and/or
wherein each notch is disposed adjacent to each of a boundary between the section disposed on the safety vent of the first battery cell and the section attached to the top surface of the first battery cell at the side of the first terminal of the first battery cell in the first part and a boundary between the section disposed on the safety vent of the second battery cell and the section attached to the top surface of the second battery cell at the side of the second terminal of the second battery cell in the second part.

13. The battery module as recited in any one of claims 1 to 9, wherein the battery cell is provided in plurality,
the insulating cover is provided in number corresponding to the number of battery cells, and
the battery module further comprises a connection part configured to connect two adjacent insulating covers to each other, and optionally
wherein the connection part is disposed at a lateral side of the insulating cover, and/or
wherein the insulating cover and the connection part are integrated with each other.

14. A battery pack comprising:
the battery module as recited in any preceding claim; and
a housing configured to accommodate the battery module.

15. A vehicle comprising the battery pack as recited in claim 14.
